(19) Europäisches Patentamt
European Patent Office
Office européen des brevets

(11) **EP 3 609 122 A1**

(12) **EUROPÄISCHE PATENTANMELDUNG**

(43) Veröffentlichungstag:
**12.02.2020   Patentblatt 2020/07**

(51) Int Cl.:
*H04L 9/32* (2006.01)          *G06Q 20/06* (2012.01)

(21) Anmeldenummer: **19187870.1**

(22) Anmeldetag: **23.07.2019**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **08.08.2018   DE 102018213301**

(71) Anmelder: **Robert Bosch GmbH**
**70442 Stuttgart (DE)**

(72) Erfinder:
• **Herd, Benjamin**
**70619 Stuttgart (DE)**
• **Scharmann, Nik**
**74321 Bietigheim - Bissingen (DE)**

(54) **VERFAHREN UND VORRICHTUNG ZUM EINHOLEN EINES ARBEITSNACHWEISES IN EINEM RECHNERNETZ**

(57)      Verfahren (10) zum Einholen eines Arbeitsnachweises in einem Rechnernetz, gekennzeichnet durch folgende Merkmale:
- abhängig von einer Rechenleistung des Rechnernetzes wird eine Allokationsaufgabe einer mehrdimensionalen Auktion mit einer vorgegebenen Zeitkomplexität gestellt (11),
- die Allokationsaufgabe wird einem Dienstnutzer in dem Rechnernetz übertragen (12) und
- eine von dem Dienstnutzer gefundene Lösung der Allokationsaufgabe wird rechnerisch überprüft (13).

Fig. 1

EP 3 609 122 A1

**Beschreibung**

Die vorliegende Erfindung betrifft ein Verfahren zum Einholen eines Arbeitsnachweises (*proof of work*, PoW, POW) in einem Rechnernetz. Die vorliegende Erfindung betrifft darüber hinaus eine entsprechende Vorrichtung, ein entsprechendes Computerprogramm sowie ein entsprechendes Speichermedium.

Stand der Technik

Auf dem Gebiet der algorithmischen Mathematik und Informatik wird als Arbeitsnachweis oder Arbeitsbeweis (*proof of work, computational puzzle, cryptographic puzzle*) jedwedes Verfahren verstanden, welches es einem Dienstnutzer erlaubt zu belegen, dass er eine beträchtliche Rechenleistung erbracht hat. PoW werden nach dem Stand der Technik beispielsweise verwendet, um den übermäßigen Gebrauch eines Dienstes zu verhindern oder die Konsensfindung bezüglich eines verteilten Konto- oder Hauptbuches (*distributed ledger*) zu ermöglichen.

Bekannte PoW-Protokolle erfordern beispielsweise das Lösen von Differentialgleichungen, die Durchführung eines Exhaustionsangriffes (*bruteforce attack*) auf abgeschwächte kryptographische Primitiven, die Ausführung mathematischer Operationen auf dicht besetzten Matrizen oder - wie im Falle der Kryptowährung "Bitcoin" oder anderweitiger Blockketten (*block chains*) - das teilweise Umkehren einer Streuwertfunktion (*hash function*).

DE102017204536B3 betrifft ein Verfahren zum Ausstellen eines virtuellen Dokuments mittels eines ersten Computersystems eines Ausstellers. Das Verfahren umfasst das Erstellen des virtuellen Dokuments, Berechnen eines Hashwerts des virtuellen Dokuments, Senden einer signierten Eintragungsanfrage mit dem Hashwert an einen Blockchain-Server, Empfangen der signierten Eintragungsanfrage durch den Blockchain-Server, Ausführen von Programminstruktionen eines durch die signierte Eintragungsanfrage identifizierten Programmmoduls durch den Blockchain-Server, wobei das Ausführen der Programminstruktionen ein Prüfen der Signatur der Eintragungsanfrage unter Verwendung eines in der Blockchain registrierten öffentlichen kryptographischen Schlüssels des Ausstellers umfasst, und, im Falle einer gültigen Signatur, zum Ausstellen des virtuellen Dokuments ein Erzeugen eines zusätzlichen Blocks der Blockchain, wobei der erzeugte Block einen dem Programmmodul zugeordneten Eintrag mit dem ersten Hashwert umfasst.

Offenbarung der Erfindung

Die Erfindung stellt ein Verfahren zum Einholen eines Arbeitsnachweises in einem Rechnernetz, eine entsprechende Vorrichtung, ein entsprechendes Computerprogramm sowie ein entsprechendes Speichermedium gemäß den unabhängigen Ansprüchen bereit.

Dem erfindungsgemäßen Ansatz liegt hierbei die Erkenntnis zugrunde, dass die im Rahmen herkömmlicher PoW-Protokolle erbrachte Rechenleistung keinem über die Erbringung des geforderten Arbeitsnachweises hinausgehenden Zweck dient.

Ein Vorzug der hier vorgestellten Lösung liegt demgegenüber im zusätzlichen ökonomischen Nutzen des erfindungsgemäßen PoW-Verfahrens. Dieser besteht vorliegend darin, Angebot und Nachfrage gemäß einem Auktionssystem gegeneinander auszugleichen.

Durch die in den abhängigen Ansprüchen aufgeführten Maßnahmen sind vorteilhafte Weiterbildungen und Verbesserungen des im unabhängigen Anspruch angegebenen Grundgedankens möglich.

Kurze Beschreibung der Zeichnungen

Ausführungsbeispiele der Erfindung sind in den Zeichnungen dargestellt und in der nachfolgenden Beschreibung näher erläutert. Es zeigt:

Figur 1 das Flussdiagramm eines Verfahrens gemäß einer ersten Ausführungsform.

Figur 2 schematisch einen Server gemäß einer zweiten Ausführungsform.

Ausführungsformen der Erfindung

Komplexe Szenarien machen den Austausch von Bündeln heterogener Güter und damit kombinatorische Auktionen zur Allokation nötig; Handelsgüter, die selbst durch mehrere Attribute charakterisiert werden können, erfordern Multi-Attribut-Auktionen, die mitunter auch als multivariate Auktionen bezeichnet werden. Sowohl kombinatorische als auch Multi-Attribut-Auktionen sind spezielle Varianten multidimensionaler Auktionen, deren Allokationsproblem der Komplexitätsklasse NP angehört. Optimale Allokationen sind demnach in beiden Fällen aufwändig zu berechnen, während die Verifikation einer gegebenen Allokation in beiden Fällen in polynomieller Zeit möglich und somit effizient berechenbar ist. Die oben genannten, in Blockchain-Systemen verwendeten Proof-of-Work-Mechanismen sind mit einer ähnlichen Aufwandsasymmetrie ausgestattet. Die im Falle der Kryptowährung "Bitcoin" verwendete PoW-Methode etwa basiert auf einer SHA-2-Einwegfunktion, erfüllt jedoch keinen weiteren ökonomischen Nutzen.

Das vorliegende Verfahren nutzt die Aufwandsasymmetrie nicht nur, um wie im Falle eines herkömmlichen PoW-Mechanismus die Konsistenz des Systems zu gewährleisten, sondern löst gleichzeitig eine Auktionsaufgabe innerhalb der absehbaren "Wirtschaft der Dinge" (*economy of things,* EoT). Ähnlich wie bei konventionellen Ansätzen bedarf es hierzu einer Funktion, welche die Rechenleistung des Netzes und Komplexität der anstehenden Auktionsaufgabe abbildet, um eine gewünschte Zeitkomplexität zu erreichen. Der bei Blockketten verwendete PoW-Algorithmus berücksichtigt diese gewünschte "Blockbestätigungszeit" (*block confirmation time*, BCT) durch Anpassung des Schwierigkeitsgrades des Hashwert-Zieles.

Im erfindungsgemäßen Verfahren gilt für die angestrebte Laufzeitkomplexität t der Zusammenhang

$$t = f(K, O, P),$$

wobei K die Komplexität der ursprünglichen Allokationsaufgabe, 0 die Rechenleistung des Ledgers und P die im Weiteren erläuterten Füllwerte (*padding*) bezeichnet. K und 0 sind nicht direkt beeinflussbar. Um die gewünschte Lautzeitkomplexität t zu erreichen, wird erfindungsgemäß der besagte Wert P eingeführt. Die Funktion von P sei nunmehr anhand zweier Fälle erläutert.

Wenn K und 0 zu hohe Werte annehmen und die Komplexität der ursprünglichen Auktionsaufgabe somit zu gering ausfällt, werden die Bündel im Orderbuch mit zusätzlichen gleichsam "leeren" Handelsgütern aufgefüllt. Im Falle einer Multi-Attribut-Auktion werden die Handelsgüter im Orderbuch in entsprechender Weise mit zusätzlichen, im obigen Sinne "leeren" Attributen versehen. Die jeweilige Maßnahme wird so lange wiederholt, bis die Gesamtkomplexität der Allokationsaufgabe der Auktion den vorgegebenen Zielwert erreicht.

Wenn K und 0 zu dagegen zu geringe Werte annehmen und die Komplexität der ursprünglichen Auktionsaufgabe somit den Zielwert übersteigt, wird die Anzahl der Kombinationsmöglichkeiten der in der kombinatorischen Auktion potentiell auftretenden Bündel vorab durch die Definition geeigneterer Bündel reduziert. Dies entspricht einer "Granularisierung" der Bündel, d. h. deren Vor-Einteilung in Klassen. Diese Klasseneinteilung wird auch hier solange angepasst, bis die Gesamtkomplexität der Allokationsaufgabe der jeweiligen Auktion den vorgegebenen Zielwert erreicht. Als alternative Maßnahme zur Erleichterung der Allokationsaufgabe wird die Anzahl der in Übereinstimmung zu bringenden Käuferangebote (bid) und Verkäuferangebote (*ask*) durch die Auswahl zufälliger Stichproben (*sampling*) reduziert.

Alternativ zu den oben beschriebenen Maßnahmen kann ein approximativer Ansatz sinnvoll sein, der auf einer kontinuierlichen Skala hinsichtlich seiner Annäherung an das theoretisch optimale Allokationsergebnis parametrisiert werden kann. Dieser Ansatz würde grundsätzlich approximative Ergebnisse liefern, deren Genauigkeit jedoch präzise mit statistischen Methoden quantifizierbar wäre.

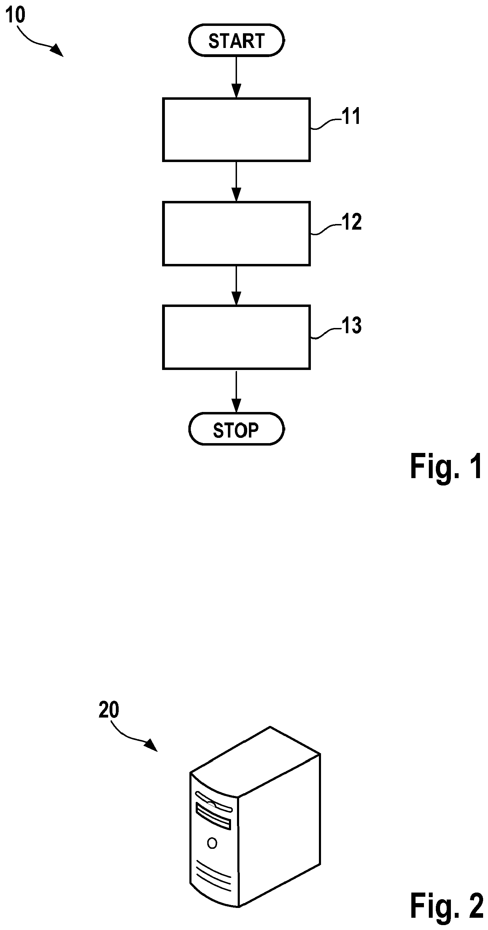

Figur 1 illustriert die grundlegenden Schritte des resultierenden Verfahrens (10) in ihrer Gesamtheit. Nach der beschriebenen Festlegung der Allokationsaufgabe (Prozess 11) wird diese einem Dienstnutzer übertragen (Prozess 12) und die von letzterem gefundene Lösung schließlich rechnerisch überprüft (Prozess 13).

Dieses Verfahren (10) kann beispielsweise in Software oder Hardware oder in einer Mischform aus Software und Hardware beispielsweise in einem Server (20) implementiert sein, wie die schematische Darstellung der Figur 2 verdeutlicht.

## Patentansprüche

1.  Verfahren (10) zum Einholen eines Arbeitsnachweises in einem Rechnernetz,
    **gekennzeichnet durch** folgende Merkmale:

    - abhängig von einer Rechenleistung des Rechnernetzes wird eine Allokationsaufgabe einer mehrdimensionalen Auktion gestellt (11), wobei die Allokationsaufgabe eine vorgegebene Zeitkomplexität aufweist,
    - die Allokationsaufgabe wird einem Dienstnutzer in dem Rechnernetz übertragen (12) und
    - eine von dem Dienstnutzer gefundene Lösung der Allokationsaufgabe wird rechnerisch überprüft (13).

2.  Verfahren (10) nach Anspruch 1,
    **gekennzeichnet durch** folgendes Merkmal:

    - die Auktion ist kombinatorisch.

3.  Verfahren (10) nach Anspruch 2,
    **gekennzeichnet durch** folgendes Merkmal:

    - die Allokationsaufgabe wird abhängig von der vorgegebenen Zeitkomplexität bedarfsweise erschwert, indem ein Orderbuch der Auktion um Güterbündel ergänzt wird, oder vereinfacht, indem die Güterbündel zusammengefasst werden.

4.  Verfahren (10) nach Anspruch 2 oder 3,
    **gekennzeichnet durch** folgendes Merkmal:

    - die Allokationsaufgabe wird abhängig von der vorgegebenen Zeitkomplexität bedarfsweise vereinfacht, indem Güterbündel in einem Orderbuch der Auktion zu Klassen zusammengefasst werden.

5.  Verfahren (10) nach einem der Ansprüche 1 bis 4,
    **gekennzeichnet durch** folgende Merkmale:

    - die Auktion ist multivariat und
    - die Allokationsaufgabe wird abhängig von der vorgegebenen Zeitkomplexität bedarfsweise erschwert, indem Handelsgüter in einem Orderbuch der Auktion um Attribute ergänzt werden.

6.  Verfahren (10) nach einem der Ansprüche 1 bis 5, **gekennzeichnet durch** folgendes Merkmal:

    - die Allokationsaufgabe wird abhängig von der vorgegebenen Zeitkomplexität bedarfsweise vereinfacht, indem Angebote und Nachfragen stichprobenartig reduziert werden.

7.  Verfahren (10) nach einem der Ansprüche 1 bis 6, **gekennzeichnet durch** folgende Merkmale:

    - der Arbeitsnachweis wird zur Konsensfindung in einem verteilten Hauptbuch verwendet.

8.  Computerprogramm, welches eingerichtet ist, das Verfahren (10) nach einem der Ansprüche 1 bis 7 auszuführen.

9.  Maschinenlesbares Speichermedium, auf dem das Computerprogramm nach Anspruch 8 gespeichert ist.

10. Vorrichtung (20), die eingerichtet ist, das Verfahren (10) nach einem der Ansprüche 1 bis 7 auszuführen.

10

```
    START
      │
      ▼
┌──────────────┐
│              │─── 11
└──────────────┘
      │
      ▼
┌──────────────┐
│              │─── 12
└──────────────┘
      │
      ▼
┌──────────────┐
│              │─── 13
└──────────────┘
      │
      ▼
    STOP
```

**Fig. 1**

20

**Fig. 2**

Europäisches
Patentamt

European
Patent Office

Office européen
des brevets

# EUROPÄISCHER RECHERCHENBERICHT

Nummer der Anmeldung

EP 19 18 7870

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | YUTAO JIAO ET AL: "Auction Mechanisms in Cloud/Fog Computing Resource Allocation for Public Blockchain Networks", ARXIV.ORG, CORNELL UNIVERSITY LIBRARY, 201 OLIN LIBRARY CORNELL UNIVERSITY ITHACA, NY 14853, 26. April 2018 (2018-04-26), XP080874345, * Zusammenfassung * * Kapitel III und V * ----- | 1-10 | INV. H04L9/32 G06Q20/06 |
| X | NGUYEN CONG LUONG ET AL: "Optimal Auction For Edge Computing Resource Management in Mobile Blockchain Networks: A Deep Learning Approach", ARXIV.ORG, CORNELL UNIVERSITY LIBRARY, 201 OLIN LIBRARY CORNELL UNIVERSITY ITHACA, NY 14853, 8. November 2017 (2017-11-08), XP081286336, * Zusammenfassung * * Kapitel III und IV * ----- | 1-10 | |

**RECHERCHIERTE SACHGEBIETE (IPC)**

H04L
G07G
G06Q

Der vorliegende Recherchenbericht wurde für alle Patentansprüche erstellt

| Recherchenort | Abschlußdatum der Recherche | Prüfer |
|---|---|---|
| München | 29. November 2019 | Wolters, Robert |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

   & : Mitglied der gleichen Patentfamilie, übereinstimmendes
Dokument

EPO FORM 1503 03.82 (P04C03)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102017204536B3